# EUROPÄISCHE PATENTANMELDUNG

(11) **EP 1 172 071 A2**
(43) Veröffentlichungstag der Anmeldung: **16.01.2002**
(21) Anmeldenummer: 01890204.9
(22) Anmeldetag: 06.07.2001
(51) Int. Cl.: A61C 1/00

(54) **Steuerung von Handstücken**

(30) Priorität: 13.07.2000 AT 12222000
(71) Anmelder: W & H Dentalwerk Bürmoos GmbH, 5111 Bürmoos (AT)
(72) Erfinder: Sevcik, Roland, Dipl.-Ing., 83435 Bad Reichenhall (DE); Schröck, Rainer, Ing., 5112 Lamprechtshausen (AT)
(74) Vertreter: Patentanwälte BARGER, PISO & PARTNER

(57) **Zusammenfassung**

Die Erfindung betrifft ein zahnärztliches oder chirurgisches Handstück mit einem drehbaren Werkzeug und einem elektromotorischen Antrieb für das Werkzeug und mit einer Steuer- bzw. Regeleinrichtung für das Handstück und insbesondere dessen Elektromotor.

Die Erfindung ist dadurch gekennzeichnet, daß der Motorstrom auf vorbestimmte Maximalwerte beschränkt werden kann.

Die Erfindung betrifft weiters ein Verfahren zum Betrieb eines erfindungsgemäßen Handstückes.

## Beschreibung

Die Erfindung betrifft ein zahnärztliches oder chirurgisches Handstück mit einem drehbaren Werkzeug und einem elektromotorischen Antrieb für das Werkzeug und mit einer Steuer- bzw. Regeleinrichtung für das Handstück und insbesondere dessen Elektromotor. Die Erfindung betrifft weiters ein Verfahren zum Betrieb eines erfindungsgemäßen Handstückes.

Derartige Handstücke, die zumeist, aber nicht ausschließlich, zum Bohren von Löchern oder zum Schneiden von Gewinden in Zähne oder Knochen dienen, werden üblicherweise folgendermaßen gesteuert:

Auf einem zumeist elektronisch arbeitenden Steuergerät wird in Abhängigkeit von der vorzunehmenden Arbeit und dem verwendeten Werkzeug die maximal gewünschte Drehzahl eingestellt. Über einen Fußschalter kann der Benutzer sodann kontinuierlich oder in feiner Abstufung die Drehzahl des Werkzeuges im Handstück bis zum vorgegebenen Maximum regeln und so mit seiner Erfahrung und Übung den gewünschten Abtrag an Material bestimmen. Dabei wird von der Steuerung der Motorstrom so eingestellt, daß die vom Benutzer über den Fußschalter vorgegebene Drehzahl erreicht bzw. gehalten wird.

Es gibt auch spezielle Geräte zum Einschrauben von Implantatträgern in vorbereitete Löcher, bei denen während des Einschraubens der Implantatträger das vom Handstück übertragene Drehmoment bestimmt wird, um sichergehen zu können, daß einerseits der Implantatträger fest genug eingeschraubt wird und daß er andererseits nicht so fest eingeschraubt wird, daß er das knochenseitig vorliegende Gewinde (entweder selbstschneidend oder vorgeschnitten) beschädigt (Abfall des Drehmomentes gegen Ende des Einschraubvorganges).

Es hat sich nun im Zuge von verschiedenen Versuchen herausgestellt, daß es sowohl für die Benutzer als auch für die Patienten vorteilhaft ist, wenn bei Handstücken der eingangs genannten Art nicht die Drehzahl, sondern das Drehmoment regelbar ist. Dies kann insbesondere beim Feststecken des Werkzeuges oder bei dessen Bruch mithelfen, Verletzungen des Patienten zu verhindern und ermöglicht es auch dem Benutzer des Instrumentes, sich auf seine Tätigkeit zu konzentrieren, ohne auch auf das jeweils übertragene Drehmoment, das ja bisher nur erfahrungs- und gefühlsmäßig zu erfassen war, achten zu müssen.

Es besteht daher die Aufgabe der Erfindung darin, das Drehmoment eines Handstückes passend zu regeln.

Die Erfindung löst diese Aufgabe dadurch, daß der Motorstrom unter Einhaltung einer vorgegebenen Drehzahl vom Benutzer regelbar ist. Der Motorstrom steht, zwar in Abhängigkeit vom jeweils verwendeten Handstück, den Schmierungseigenschaften der Lager des Handstückes und dem verwendeten Werkzeug, unter Beachtung dieser Größen aber eindeutig, mit dem übertragenen Drehmoment in Korrelation. Es kann somit in Kenntnis des eingespannten Werkzeuges und des verwendeten Handstückes unter Zugrundelegung einer ordnungsgemäßen Wartung des Handstückes (Widerstand der Lager) eine ausreichend genaue Korrelation zwischen dem Motorstrom und dem übertragenen Drehmoment hergestellt werden, um die erfindungsgemäßen Ziele zu erreichen.

Das erfindungsgemäße Verfahren zum Betrieb eines solchen Handstückes ist dadurch gekennzeichnet, daß für das Handstück in Abhängigkeit vom einzusetzenden Werkzeug der Zusammenhang zwischen Motorstrom und Drehmoment am Werkzeug bestimmt und gespeichert wird und daß der Motorstrom in Abhängigkeit vom so festgestellten Zusammenhang für das jeweils momentan gewünschte Drehmoment bestimmt wird. Dabei kann vorteilhafterweise eine maximale Drehzahl und/oder, speziell bevorzugt, ein maximales Drehmoment vorgegeben werden, um beispielsweise im Falle des Feststeckens des Werkzeuges, Verletzungen des Patienten sicher zu vermeiden.

Es entspricht somit die erfindungsgemäße Regelung spiegelbildlich der Regelung gemäß dem Stand der Technik: Statt die Drehzahl bis zu einer vorgegebenen Maximaldrehzahl regelbar zu machen und, bei voller Aussteuerung, den maximalen Motorstrom als Begrenzung zu haben, wird der Motorstrom direkt gesteuert, bis er (eventuell) ein voreingestelltes Maximum erreicht, wobei aber bevorzugt eine (ebenfalls) voreingestellte Maximaldrehzahl nicht überschritten wird.

In Kenntnis der Erfindung ist es ein leichtes, auch für bereits vorhandene Winkelstücke unter Vornahme einiger weniger Versuche den entsprechenden Zusammenhang Motorstrom-Drehmoment festzustellen, sodaß auch bereits vorhandene Winkelstücke mit einer neuen Steuereinheit erfindungsgemäß eingesetzt werden können. Ebenso ist ein periodisches Überprüfen der Richtigkeit dieses Zusammenhanges mit einer einfachen Vorrichtung zur Drehmomentmessung möglich.

Die Erfindung kann auf alle bekannten Handstücke mit Elektromotor angewandt werden und ist nicht auf die Verwendung im Dentalbereich oder chirurgischen Bereich beschränkt.

## Patentansprüche

1. Steuer- bzw. Regelvorrichtung für ein zahnärztliches oder chirurgisches Handstück mit einem drehbaren Werkzeug und einem elektromotorischen Antrieb für das Werkzeug, **dadurch gekennzeichnet, daß** die Steuer- bzw. Regelvorrichtung den Motorstrom regelt und daß ein vorbestimmter maximaler Motorstrom, entsprechend einem vorgegebenen maximalen Drehmoment, und/oder eine maximale Drehzahl des Werkzeuges an der Steuer- bzw. Regelvorrichtung einstellbar ist.

2. Verfahren zum Betrieb eines zahnärztlichen oder chirurgischen Handstück, **dadurch gekennzeichnet, daß** für das Handstück in Abhängigkeit vom einzusetzenden Werkzeug der Zusammenhang zwischen Motorstrom und Drehmoment am Werkzeug bestimmt und gespeichert wird und daß die Regelung und gegebenenfalls Begrenzung des Motorstromes in Abhängigkeit vom so festgestellten Zusammenhang für das jeweils gewünschte bzw. maximale Drehmoment ausgewählt wird.

3. Verfahren nach Anspruch 2, **dadurch gekennzeichnet, daß** die Regel- bzw. Steuervorrichtung eine vorgegebene maximale Drehzahl des Werkzeuges einhält.
